# EUROPEAN PATENT SPECIFICATION

(11) **EP 4 357 377 B1**
(45) Date of publication and mention of the grant of the patent: **08.04.2026**
(21) Application number: 22825036.1
(22) Date of filing: 15.06.2022
(51) Int. Cl.: C08F 214/26, C08F 2/16, C08F 14/26, C08F 2/20

(54) **METHOD FOR PRODUCING FLUORINE-CONTAINING COPOLYMER**
VERFAHREN ZUR HERSTELLUNG EINES FLUORHALTIGEN COPOLYMERS
PROCÉDÉ DE PRODUCTION D'UN COPOLYMÈRE CONTENANT DU FLUOR

(30) Priority: 18.06.2021 JP 2021101448
(43) Date of publication of application: 24.04.2024
(73) Proprietor: AGC INC., Chiyoda-ku, Tokyo 1008405 (JP)
(72) Inventor: SHIBASAKI, Kosuke, Tokyo 100-8405 (JP); ORITO, Yuki, Tokyo 100-8405 (JP); HORI, Keiji, Tokyo 100-8405 (JP); FUKUNAGA, Shintaro, Tokyo 100-8405 (JP); TAGUCHI, Daisuke, Tokyo 100-8405 (JP)
(74) Representative: Müller-Boré & Partner Patentanwälte PartG mbB
(86) International application number: PCT/JP2022/024009
(87) International publication number: WO 2022/265048

(56) References cited:
- CN-A- 110 655 664
- JP-A- 2015 504 960
- JP-A- S5 284 271
- RU-C1- 2 200 167
- US-A1- 2021 009 732

## Description

### TECHNICAL FIELD

The present invention relates to a method for producing a fluorinated copolymer.

### BACKGROUND ART

A fluorinated copolymer based on tetrafluoroethylene (hereinafter referred to also as "TFE"), such as an ethylene/tetrafluoroethylene copolymer or a tetrafluoroethylene/perfluoroalkyl vinyl ether copolymer, is used in various industrial fields since it is excellent in heat resistance, chemical resistance, flame retardance, weather resistance, etc.

In Patent Document 1, a method for producing a fluorinated copolymer to obtain a vinylidene fluoride-based fluorinated copolymer, by using, as an initiator system, a hydroperoxide such as tert-butyl hydroxide and a reducing agent such as trade name Bruggolite (registered trademark), is disclosed. Patent Document 2 discloses a method for producing a VDF/TFE copolymer comprising polymerising VDF and TFE in the presence of ter-butyl hydroperoxide and formic acid.

### PRIOR ART DOCUMENT

### PATENT DOCUMENT

Patent Document 1: JP-A-2020-525581, Patent Document 2: RU 2200167 C1.

### DISCLOSURE OF INVENTION

### TECHNICAL PROBLEM

When a fluorinated copolymer based on TFE was prepared by using the initiator system described in Patent Document 1, the obtained fluorinated copolymer was poor in thermal stability, whereby coloration and foaming occurred when heated for the purpose of e.g. high temperature molding.

The present invention has an object to provide a method for producing a fluorinated copolymer, whereby it is possible to efficiently produce a fluorinated copolymer in which coloration and foaming are suppressed during heating.

### SOLUTION TO THE PROBLEM

As a result of a diligent study, the present inventors have found that the above problem can be solved by the following construction.
[1] A process for producing a fluorinated copolymer, comprising a step of polymerizing tetrafluoroethylene and other monomer other than the tetrafluoroethylene to produce a fluorinated copolymer in the presence of a hydroperoxide, at least one selected from the group consisting of a sulfite, a hydrogen sulfite, a dithionite and a metabisulfite, at least one selected from the group consisting of an acidic substance and a substance that generates an acid by hydrolysis, and an aqueous medium.
[2] The method for producing a fluorinated copolymer according to [1], wherein the hydroperoxide is a compound represented by the following formula (X): 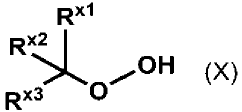 in the formula (X), R^{x1} to R^{x3} represent each independently a C₁₋₁₀ alkyl group.
[3] The method for producing a fluorinated copolymer according to [1] or [2], wherein the other monomer is at least one selected from the group consisting of ethylene, propylene, a perfluoroalkyl vinyl ether, a fluoroalkyl ethylene and hexafluoropropylene.
[4] The method for producing a fluorinated copolymer according to any one of [1] to [3], wherein the acidic substance and the substance that generates an acid by hydrolysis are selected from the group consisting of compounds represented by the formulae (A) to (E): 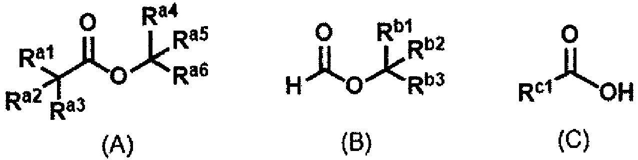 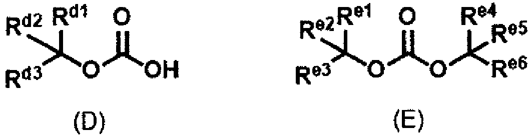
   in the formula (A), R^{a1} to R^{a6} represent each independently a hydrogen atom or an alkyl group,
   in the formula (B), R^{b1} to R^{b3} represent each independently a hydrogen atom or an alkyl group,
   in the formula (C), R^{c1} represents a hydrogen atom or an alkyl group,
   in the formula (D), R^{d1} to R^{d3} represent each independently a hydrogen atom or an alkyl group, and
   in the formula (E), R^{e1} to R^{e6} represent each independently a hydrogen atom or an alkyl group.
[5] The method for producing a fluorinated copolymer according to any one of [1] to [4], wherein the amount of the hydroperoxide used is from 0.0001 to 1.0 mass% to the entire mass of the aqueous medium.
[6] The method for producing a fluorinated copolymer according to any one of [1] to [5], wherein the amount of the sulfite, the hydrogen sulfite, the dithionite or the metabisulfite used is from 0.0001 to 1.0 mass% to the entire mass of the aqueous medium.
[7] The method for producing a fluorinated copolymer according to any one of [1] to [6], wherein the amount of the acidic substance or the substance that generates an acid by hydrolysis is from 0.0005 to 20.0 mass% to the entire mass of the aqueous medium.
[8] The method for producing a fluorinated copolymer according to any one of [1] to [7], wherein
   the sulfite is sodium sulfite, potassium sulfite, or ammonium sulfite,
   the hydrogen sulfite is sodium hydrogen sulfite, potassium hydrogen sulfite, or ammonium hydrogen sulfite,
   the dithionite is sodium dithionite, potassium dithionite, or ammonium dithionite, and
   the metabisulfite is sodium metabisulfite, potassium metabisulfite, or ammonium metabisulfite.
[9] The method for producing a fluorinated copolymer according to any one of [1] to [8], wherein a polyalkylene oxide compound is further present in the step.
[10] The method for producing a fluorinated copolymer according to any one of [1] to [8], wherein an emulsifier is further present in the step.

### ADVANTAGEOUS EFFECTS OF THE INVENTION

According to the present invention, it is possible to efficiently produce a fluorinated copolymer in which coloration and foaming are suppressed during heating.

### DESCRIPTION OF EMBODIMENTS

The meanings of the terms in the present invention are as follows

A "unit" is a generic term for a group of atoms derived from a single monomer molecule, formed directly by polymerization of the monomer.

A numerical range represented by " to " means a range that includes the numerical values listed before and after " to " as the lower and upper limit values.

The method for producing a fluorinated copolymer of the present invention (hereinafter referred to also as "the present production method") comprises a step (hereinafter referred to also as "step 1") of polymerizing TFE, and other monomer other than TFE (hereinafter simply referred to also as "other monomer"), to produce a fluorinated copolymer in the presence of a hydroperoxide, at least one selected from the group consisting of a sulfite, a hydrogen sulfite, a dithionite and a metabisulfite (hereinafter referred to also as a "specific reducing agent") and at least one selected from the group consisting of an acidic substance and a substance that generates an acid by hydrolysis (hereinafter referred to also as a "specific acidic substance"), and an aqueous medium.

In the following, step 1 will be described in detail.

### <Materials used in step 1>

### (Hydroperoxide)

A hydroperoxide refers to a compound containing a group represented by *-O-OH. At the position of *, a hydrogen atom or an alkyl group is preferably bonded.

In step 1, the hydroperoxide is decomposed by the action of a specific reducing agent in the presence of a specific acidic substance, to act as a radical initiator. Unlike a known persulfate such as potassium persulfate, as a radical initiator, a hydroperoxide does not have an ionic functional group, whereby the thermal stability of the fluorinated copolymer obtained by the present production method will be improved. As a result, it is possible to obtain a fluorinated copolymer in which coloration and foaming is suppressed when heated.

Under conditions where a specific reducing agent or a specific acidic substance is not present, the hydroperoxide will not decompose and thus will not act as a radical initiator.

For judgement of the action as a radical initiator by the decomposition of the hydroperoxide, the pH of the aqueous dispersion after completion of the polymerization can be used as an indicator. The pH of the aqueous dispersion after completion of the polymerization is preferably from 3.0 to 8.0, more preferably from 4.0 to 7.0, further preferably from 4.4 to 7.0.

Here, in this specification, the pH is a value measured at 25°C and can be measured by the Horiba compact pH meter LAQUAtwin pH-11B.

The hydroperoxide in step 1 is preferably water soluble. In this specification, the hydroperoxide is considered to be water soluble if at least 0.01 g of the hydroperoxide is dissolved in 1 L of water.

As specific examples of the hydroperoxide, hydrogen peroxide and a compound represented by the following formula (X) may be mentioned.

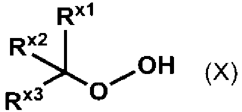

In the formula (X), R^{x1} to R^{x3} represent each independently a C₁₋₁₀ alkyl group.

The number of carbon atoms in the above alkyl group is preferably from 1 to 5, more preferably from 1 to 3, further preferably 1.

As the hydroperoxide, a compound represented by the above formula (X) is preferred.

As specific examples of the compound represented by the formula (X), tert-butyl hydroperoxide (hereinafter referred to also as "TBHP"), 1,1,3,3-tetramethylbutyl hydroperoxide, cumene hydroperoxide, and p-menthane hydroperoxide may be mentioned. Among these, TBHP and 1,1,3,3-tetramethylbutyl hydroperoxide are preferred, and TBHP is more preferred.

The amount of the hydroperoxide used is preferably from 0.0001 to 1.0 mass%, more preferably from 0.0005 to 0.5 mass%, further preferably from 0.001 to 0.1 mass%, to the entire mass of the aqueous medium.

Further, the amount of the hydroperoxide used is preferably from 0.001 to 5.0 mass%, more preferably from 0.005 to 2.5 mass%, further preferably from 0.01 to 0.1 mass%, to the total amount (total mass) of TFE and other monomer used.

Here, the total amount of TFE and other monomer used means the total mass of TFE and other monomer consumed in the reaction to produce the fluorinated copolymer.

### (Sulfite, hydrogen sulfite, dithionite and metabisulfite)

A sulfite, a hydrogen sulfite, a dithionite and a metabisulfite can act each as a reducing agent in the presence of a specific acidic substance to decompose the hydroperoxide.

As the sulfite, sodium sulfite, potassium sulfite or ammonium sulfite may be mentioned.

As the hydrogen sulfite, sodium hydrogen sulfite, potassium hydrogen sulfite or ammonium hydrogen sulfite may be mentioned.

As the dithionite, sodium dithionite, potassium dithionite or ammonium dithionite may be mentioned.

As the metabisulfite, sodium metabisulfite, potassium metabisulfite or ammonium metabisulfite may be mentioned.

Here, among the above sulfites, hydrogen sulfites, dithionites and metabisulfites, any one of them may be used alone, or two or more of them may be used in combination.

When a reducing agent such as the product name Bruggolite (registered trademark) is used, chain transfer occurs during the polymerization. Therefore, an unstable group will be present as a terminal group. As a result, the obtainable fluorinated copolymer will be poor in thermal stability, and coloration and foaming will occur when the fluorinated copolymer is heated.

In contrast, when the specific reducing agent is used, chain transfer does not occur during the polymerization. Therefore, there will be no unstable group as a terminal group, and the thermal stability of the resulting fluorinated copolymer will be improved. As a result, coloration and foaming will be suppressed when the fluorinated copolymer is heated.

Among these, a sulfite or a hydrogen sulfite is preferred; sodium sulfite or sodium hydrogen sulfite is more preferred; and sodium sulfite is further preferred.

The amount of the specific reducing agent used is preferably from 0.0001 to 1.0 mass%, more preferably from 0.0005 to 0.5 mass%, further preferably from 0.010 to 0.20 mass%, to the entire mass of the aqueous medium.

When two or more types of sulfites, hydrogen sulfites, dithionites and metabisulfites are used, the total content preferably satisfies the above range.

### (Acidic substance and substance that generates acid by hydrolysis)

The specific acidic substance has the function of making the reaction system to be an acidic condition, and by using this specific acidic substance, the specific reducing agent can function as a reducing agent to decompose the hydroperoxide as described above.

The acidic substance is a substance, of which an aqueous solution or dispersion when dissolved or dispersed in an aqueous medium, shows acidity, and an organic acid and an inorganic acid may be mentioned.

As the organic acid, a carboxylic acid compound such as acetic acid, propionic acid, formic acid or oxalic acid, or a sulfonic acid compound such as methanesulfonic acid or sodium trifluoromethanesulfonate, may be mentioned.

As the inorganic acid, sulfuric acid, nitric acid, hydrofluoric acid, sodium hydrogen sulfite or phosphoric acid may be mentioned.

The substance that generates an acid by hydrolysis, is a substance which undergoes hydrolysis when dissolved or dispersed in an aqueous medium, and its aqueous solution or dispersion shows acidity.

As the substance that generates an acid by hydrolysis, methyl acetate, ethyl acetate, ethylene carbonate or dimethyl carbonate may be mentioned.

Here, among the acidic substances and the substances that generate acids by hydrolysis, any one of them may be used alone, or two or more of them may be used in combination.

As specific acidic substances, compounds represented by the formulae (A) to (E) are preferred. Compounds represented by the formulae (A) to (B) and (D) to (E) correspond to substances that generate acids by hydrolysis, and compounds represented by the formula (C) correspond to acidic substances.

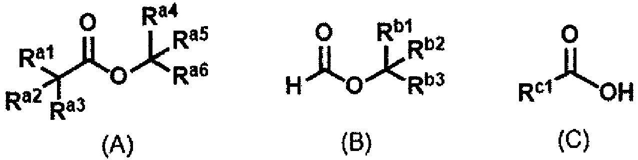

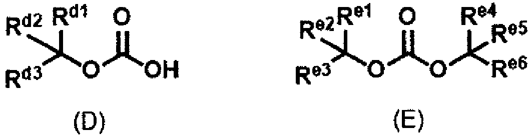

In the formula (A), R^{a1} to R^{a6} represent each independently a hydrogen atom or an alkyl group.

In the formula (B), R^{b1} to R^{b3} represent each independently a hydrogen atom or an alkyl group.

In the formula (C), R^{c1} represents a hydrogen atom or an alkyl group.

In the formula (D), R^{d1} to R^{d3} represent each independently a hydrogen atom or an alkyl group.

In the formula (E), R^{e1} to R^{e6} represent each independently a hydrogen atom or an alkyl group.

The number of carbon atoms in the alkyl groups represented by R^{a1} to R^{a6}, R^{b1} to R^{b3}, R^{c1}, R^{d1} to R^{d3}, and R^{e1} to R^{e6} is preferably from 1 to 10, more preferably from 1 to 5, further preferably from 1 to 2.

The amount of the specific acidic substance used is preferably from 0.0005 to 20.0 mass%, more preferably from 0.001 to 10.0 mass%, further preferably from 0.05 to 3.0 mass%, to the entire mass of the aqueous medium.

When two or more types of the acidic substance and the substance that generates an acid by hydrolysis are used, the total content preferably satisfies the above range.

### (Aqueous medium)

As the aqueous medium, for example, water or a mixture of water and an water-soluble organic solvent may be mentioned.

As specific examples of the water-soluble organic solvent, tert-butanol, propylene glycol, and dipropylene glycol may be mentioned. In the case of the mixture of water and a water-soluble organic solvent, the concentration of the water-soluble organic solvent is preferably at most 10 mass%. As the aqueous medium, water alone is preferred.

### (Other monomer)

Other monomer may be any monomer that can copolymerize with TFE.

As specific examples of other monomer, ethylene, propylene, a perfluoroalkyl vinyl ether (hereinafter referred to also as "PAVE"), a perfluoroalkylethylene (hereinafter referred to also as "FAE") and hexafluoropropylene may be mentioned.

As specific examples of PAVE, CF₂=CFOCF₃ (hereinafter referred to also as "PMVE"), CF₂=CFOCF₂CF₃, CF₂=CFOCF₂CF₂CF₃ (hereinafter referred to also as "PPVE"), CF₂=CFOCF₂CF₂CF₂CF₃ and CF₂=CFO(CF₂)₈F may be mentioned, and PMVE and PPVE are preferred.

As specific examples of FAE, CH₂=CH(CF₂)₂F (hereinafter referred to also as "PFEE"), CH₂=CH(CF₂)₃F, CH₂=CH(CF₂)₄F (hereinafter referred to also as "PFBE"), CH₂=CF(CF₂)₃H and CH₂=CF(CF₂)₄H may be mentioned, and PFEE and PFBE are preferred.

Further, as other monomer, vinyl chloride, vinylidene chloride and vinyl fluoride may also be mentioned.

Further, as other monomer, a monomer having an oxygen-containing polar group may also be mentioned. As the oxygen-containing polar group, an acid anhydride residue, a hydroxy group, a carbonyl group-containing group, an acetal group, or an oxycycloalkane group is preferred, and an acid anhydride residue is more preferred. As the monomer having a cyclic acid anhydride residue, a monomer having a cyclic anhydride residue is preferred, and itaconic anhydride, citraconic anhydride, 5-norbornene-2,3-dicarboxylic anhydride, or maleic anhydride is more preferred.

The ratio of TFE to the total of TFE and other monomer is preferably from 40 to 99.5 mol%. In the above range, the fluorinated copolymer becomes to be easily melt-moldable.

The fluorinated copolymer obtainable by the present production method comprises units based on tetrafluoroethylene (TFE) (hereinafter referred to also as "TFE units") and units based on other monomer (hereinafter referred to also as "other monomer units").

In a case where other monomer units are units derived from ethylene (hereinafter referred to also as "E units"), the fluorinated copolymer contains preferably from 40 to 70 mol%, more preferably from 45 to 65 mol% of TFE units, to the total of TFE units and E units.

In a case where other monomer units are units derived from propylene (hereinafter referred to also as "P units"), the fluorinated copolymer contains preferably from 30 to 70 mol%, more preferably from 45 to 65 mol% of TFE units, to the total of TFE units and P units.

In a case where other monomer units are units derived from PAVE (hereinafter referred to also as "PAVE units"), the fluorinated copolymer contains preferably from 90 to 99.9 mol%, more preferably from 95 to 99.5 mol% of TFE units, to the total of TFE units and PAVE units.

In a case where other monomer units are units derived from FAE (hereinafter referred to also as "FAE units"), the fluorinated copolymer contains preferably from 60 to 90 mol%, more preferably from 70 to 80 mol% of TFE units, to the total of TFE units and FAE units.

In a case where other monomer units are units derived from hexafluoropropylene (hereinafter referred to also as "6F units"), the fluorinated copolymer contains preferably from 85 to 96 mol%, more preferably from 87 to 95 mol% of TFE units, to the total of TFE units and 6F units.

In a case where other monomer units contain both E units and FAE units, the fluorinated copolymer contains preferably from 40 to 70 mol%, more preferably from 45 to 65 mol% of TFE units, to the total of TFE units, E units and FAE units.

The ratios of the respective units in the fluorinated copolymer can be adjusted by the amounts of the respective monomers to be charged at the time of polymerization. Further, they can be measured by an NMR analysis such as nuclear magnetic resonance (NMR) analysis, a fluorine content analysis, an infrared absorption spectrum analysis, etc.

### (Other components)

In step 1, other components other than the hydroperoxide, the specific reducing agent, the specific acidic substance and the aqueous medium may be present during polymerization to such an extent that the effects of the invention will not be impaired.

As other components, the after-described specific polymer, polyalkylene oxide compound and emulsifier, may be mentioned, and such components will be described in detail in the following sections.

### <Procedure in step 1>

TFE and other monomer are fed into the reaction system (i.e. a polymerization reaction vessel) in a usual manner. For example, TFE is continuously or intermittently fed into the reaction system so that the polymerization pressure becomes a predetermined pressure. Further, for example, other monomer is dissolved in an aqueous medium, and the obtained solution is continuously or intermittently fed into the reaction system.

The hydroperoxide, the specific reducing agent and the specific acidic substance may be added to the reaction system in one batch or dividedly.

The polymerization temperature is preferably from 10 to 95°C, more preferably from 15 to 90°C. The polymerization pressure is preferably from 0.5 to 4.0 MPaG, more preferably from 0.6 to 3.5 MPaG. The polymerization time is preferably from 90 to 1,000 minutes, more preferably from 90 to 700 minutes, for batch processing.

In the present production method, step 1 may be carried out without using an emulsifier or by using an emulsifier.

As suitable embodiments of step 1, the following first to third embodiments may be mentioned. Hereinafter, each of such embodiments will be described in detail.

### (First embodiment)

In the first embodiment, it is preferred to carry out step 1 under such a condition that a specific polymer comprising at least one type of units selected from units based on a compound represented by the following formula (1) (hereinafter referred to also as "compound (1)"), and units based on a compound represented by the following formula (2) (hereinafter referred to also as "compound (2)") and a compound represented by the following formula (3) (hereinafter referred to also as "compound (3)"), is further present. That is, in the first embodiment, polymerization of the above TFE and other monomer is carried out in the presence of a hydroperoxide, a specific reducing agent, a specific acidic substance, an aqueous medium, and a specific polymer.

Further, in the first implementation, it is preferred to conduct the process under the substantial absence of an emulsifier.

As the emulsifier, a known emulsifier may be mentioned, and a common surfactant may be mentioned.

Under the substantial absence of an emulsifier means an environment in which the content of an emulsifier is at most 0.03 mass ppm, to the entire mass of the aqueous medium; preferably at most 0.02 mass ppm, more preferably 0 mass ppm.

It is assumed that the specific polymer solubilizes TFE and other monomer by adsorbing and incorporating TFE and other monomer in the hydrophobic part when polymerizing TFE and other monomer in step 1, and the polymerization of TFE and other monomer is efficiently advanced by the coexistence of the hydroperoxide, the specific reducing agent and the specific acidic substance here.

Formula (1): CXY=CR¹-L¹-R²

Formula (2): CXY=CR¹-COO-(L²-O)ₙ-R³

Formula (3): CXY=CR⁴-(O)ₘ-CH₂-Z-R⁵

In the formula (1), X and Y represent each independently a hydrogen atom, a halogen atom or a methyl group. X and Y preferably represent each independently a hydrogen atom, a fluorine atom or a chlorine atom, and more preferably represent each a hydrogen atom.

In the formula (1), R¹ represents a hydrogen atom, a halogen atom or a C₁₋₃ alkyl group. As R¹, a C₁₋₃ alkyl group is preferred, and a methyl group is more preferred.

In the formula (1), L¹ represents -CO-O-*, -O-CO-* or -O-. Here, * represents the bonding position to R². As L¹, -CO-O-* or -O-CO-* is preferred, and -CO-O-* is more preferred.

In the formula (1), R² represents a cyclic alkyl group, a monovalent aromatic hydrocarbon group or a C₁₋₆ chain alkyl group. Here, an etheric oxygen atom may be present between carbon-carbon bonds of the C₁₋₆ chain alkyl group of R², and a hydrogen atom contained in the cyclic alkyl group, the monovalent aromatic hydrocarbon group, and the C₁₋₆ chain alkyl group of R² may be replaced by a halogen atom.

As R², a cyclohexyl group, a phenyl group, a C₁₋₄ chain alkyl group, a C₁₋₄ chain fluoroalkyl group, or a C₂₋₅ chain alkyl group having an etheric oxygen atom between carbon-carbon bonds, is preferred, and a C₁₋₄ chain alkyl group or a C₁₋₄ chain fluoroalkyl group is more preferred.

As compound (1), a compound represented by the formula (1-1) is preferred.

Formula (1-1): CH₂=C(CH₃)-CO-O-R²¹

In the formula (1-1), R²¹ is a cyclohexyl group, a phenyl group, a C₁₋₄ chain alkyl group, a C₁₋₄ chain fluoroalkyl group, or a C₂₋₃ chain alkyl group having an etheric oxygen atom between carbon-carbon bonds.

R²¹ is preferably a C₁₋₄ chain alkyl group or a C₁₋₄ chain fluoroalkyl group.

In the formula (2), X, Y and R¹ are the same as the definitions of X, Y and R¹ in the formula (1), respectively, and the preferred embodiments are also the same.

In the formula (2), L² represents an alkylene group. As L², a C₁₋₆ alkylene group is preferred, a C₁₋₃ alkylene group is more preferred, and an ethylene group is further preferred. The alkylene group in L² may be linear or branched-chain.

In the formula (2), R³ represents an alkyl group, an alkyl group having at least one -CH₂- in the alkyl group replaced by -CO- (hereinafter referred to also as a "substituted alkyl group"), or a group represented by the formula (4).

Formula (4): -CO-CR¹=CXY

In the formula (4), X, Y and R¹ are the same as the definitions of X, Y and R¹ in the formula (1), respectively, and the preferred embodiments are also the same.

In the formula (2), as the alkyl group of R³, a C₁₋₃ alkyl group is preferred, and a methyl group is more preferred.

As the number of groups represented by -CO- in the substituted alkyl group of R³, from 1 to 3 is preferred, and 2 is more preferred. The position of -CO- in the substituted alkyl group may be at the terminal in the substituted alkyl group or between -CH₂- and -CH₂-. As the substituted alkyl group of R³, -CO-CH₂-CO-CH₃ is preferred.

In the formula (2), n represents at least 1. As n, from 1 to 100 is preferred, and from 1 to 50 is more preferred.

As compound (2), a compound represented by the formula (2-1), a compound represented by the formula (2-2), or a compound represented by the formula (2-3), is preferred.

Formula (2-1): CXY=CR¹-COO-(L²-O)ₙ-R^{2a}

Formula (2-2): CXY=CR¹-COO-(L²-O)ₙ-CO-CR¹=CXY

Formula (2-3): CXY=CR¹-COO-L²-O-R^{2b}

In the formula (2-1), the formula (2-2) and the formula (2-3), X, Y and R¹ are the same as the definitions of X, Y and R¹ in the formula (1), respectively.

In the formula (2-1), the formula (2-2) and the formula (2-3), L² and n are the same as the definitions of L² and n in the formula (2), respectively.

In the formula (2-1), R^{2a} represents an alkyl group.

In the formula (2-3), R^{2b} represents a substituted alkyl group.

In the formula (3), X and Y are the same as the definitions of X and Y in the formula (1), respectively, and the preferred embodiments are also the same.

In the formula (3), R⁴ represents a hydrogen atom, a halogen atom, a C₁₋₃ alkyl group, or -CO-OCH₃. As R⁴, a C₁₋₃ alkyl group or -CO-OCH₃ is preferred.

In the formula (3), Z represents -CO-O-* or -O-CO-*. Here, * represents the bonding position to R⁴. As Z, -O-CO-* is preferred.

In the formula (3), R⁵ represents an alkyl group. As R⁵, a C₁₋₃ alkyl group is preferred, and a methyl group is more preferred.

In the formula (3), m represents 0 or 1. m is preferably 0.

As compound (3), a compound represented by the formula (3-1) is preferred.

Formula (3-1): CXY=CR^{4a}-CH₂-O-CO-R⁵

In the formula (3-1), X and Y are the same as the definitions of X and Y in the formula (1), respectively.

In the formula (3-1), R⁵ is the same as the definition of R⁵ in the formula (3).

R^{4a} represents a C₁₋₃ alkyl group.

The specific polymer is obtainable by step 0 of polymerizing compound (1) to compound (3) in the above-mentioned aqueous medium. In step 0, two or more types of compounds (1) to (3) may be used in combination.

It is preferred to carry out step 0 in the presence of the hydroperoxide described in step 1 as a polymerization initiator, and the specific reducing agent. If the hydroperoxide described in step 1 as a polymerization initiator and the specific reducing agent are used, in step 0, the specific polymer can be polymerized in an aqueous medium, and the fluorinated copolymer can be produced by conducting step 1 continuously in the same polymerization system. Polymerizing in the same polymerization system continuously means to use the aqueous medium that has been used to produce the specific polymer and in which the specific polymer has come to exist, and to polymerize TFE and other monomer in the aqueous medium in which such a specific polymer exists. In step 1, the specific polymer obtained by separate polymerization may be used, and as the specific polymer obtained by separate polymerization, a commercial product may be used.

Even when the separately polymerized specific polymer is to be used in step 1, it is preferred to conduct step 0 in the presence of a polymerization initiator. As the polymerization initiator, a water-soluble polymerization initiator is preferred. As the water-soluble polymerization initiator, a water-soluble radical initiator or a water-soluble redox catalyst is preferred.

However, the specific polymer obtained in step 0 is used in step 1 after the polymerization initiator is removed from the aqueous medium.

As the water-soluble radical initiator, a water-soluble organic peroxide such as a persulfate such as ammonium persulfate or potassium persulfate, a dicosuccinate peroxide, a bis-glutarate peroxide, or a tert-butyl hydroperoxide, is preferred.

As the water-soluble redox catalyst, a combination of an oxidizing agent such as bromic acid or its salt, chloric acid or its salt, persulfuric acid or its salt, permanganic acid or its salt, or hydrogen peroxide, and a reducing agent such as sulfurous acid or its salt, hydrogen sulfite or its salt, thiosulfate or its salt, an organic acid, or an inorganic salt, is preferred. As the persulfate, potassium persulfate or ammonium persulfate is preferred. As the sulfite, sodium sulfite is preferred. As the inorganic salt, a combination of a sulfate anion, a sulfite anion or a chloride anion, and a metal ion, may be mentioned. As the metal ion, a transition metal is preferred; ions of manganese, iron, cobalt, nickel, copper, zinc, cerium, and silver, may be mentioned; and an iron ion is preferred. As the inorganic salt, iron(II) sulfate is preferred.

As the water-soluble polymerization initiator, a water-soluble redox catalyst is preferred; particularly, a combination of potassium persulfate and sodium sulfite, and a combination of potassium persulfate, sodium sulfite and an inorganic salt, are preferred; and a combination of potassium persulfate and sodium sulfite, and a combination of potassium persulfate, sodium sulfite and iron(II) sulfate, are more preferred.

In step 0, since the polymerization of compounds (1) to (3) can easily proceed, the pH of the reaction system is adjusted to be preferably from 3 to 10, more preferably from 6 to 8. For the adjustment, a sulfite such as sodium sulfite, ammonia, sodium hydroxide, hydrochloric acid, etc. may be added as the case requires.

As the polymerization initiator, two or more types may be used in combination.

Further, as the method for charging the water-soluble polymerization initiator, its entire amount may be charged into the reaction system prior to starting the polymerization reaction, or it may be continuously or intermittently added to the reaction system.

The amount of compounds (1) to (3) to be used in step 0 is preferably from 0.0001 to 1.0 part by mass, more preferably from 0.001 to 0.5 part by mass, to 100 parts by mass of the aqueous medium. In this range, the reduction of the polymerization speed can be prevented, and the amount of the specific polymer to be mixed in the fluorinated copolymer can be reduced when the fluorinated copolymer is produced in step 1. Here, as the method for charging compounds (1) to (3), the initial batch addition, in which the entire amount is charged into the reaction system before starting the polymerization reaction, is preferred.

In a case where the specific polymer is polymerized separately, the amount of the water-soluble polymerization initiator to be used in step 0 is preferably from 0.1 to 5.0 mols, more preferably from 0.1 to 2.0 mols, further preferably from 0.1 to 1.5 mols, particularly preferably from 0.2 to 1.0 mols, to 1 mol of compounds (1) to (3).

In step 0, the polymerization temperature of compounds (1) to (3) is preferably from 10 to 95°C, more preferably from 50 to 90°C. The polymerization time is, in the case of batch treatment, preferably from 5 to 400 minutes, more preferably from 5 to 300 minutes.

The pressure conditions during polymerization is preferably under reduced pressure conditions or normal pressure conditions.

In step 0, an aqueous dispersion containing the specific polymer is obtainable. The specific polymer is particulate and homogeneously dispersed in the aqueous medium. The aqueous dispersion is colloidal.

The D50 of the particulate specific polymer (hereinafter referred to also as "specific particles") is preferably from 10 to 1,000 nm, more preferably from 10 to 300 nm, further preferably from 10 to 200 nm, particularly preferably from 10 to 150 nm.

The specific particles are composed of a polymer comprising units based on compounds (1) to (3).

The content of the units based on compounds (1) to (3) in the polymer is preferably at least 50 mass%, more preferably at least 70 mass%, further preferably at least 90 mass%, to all units in the polymer. The upper limit may be 100 mass%.

In step 0, it is easy to obtain an aqueous dispersion containing specific particles with D50 of from 10 to 1,000 nm in an amount of from 0.0001 to 1.0 part by mass to 100 parts by mass of the aqueous medium. To 100 parts by mass of the aqueous medium, the specified particles are preferably contained from 0.005 to 0.5 part by mass and more preferably contained from 0.002 to 0.1 part by mass.

### (Second embodiment)

In the second embodiment, step 1 is carried out in the further presence of a polyalkylene oxide compound and in the substantial absence of an emulsifier. That is, in the second embodiment, the above polymerization of TFE and other monomer is carried out in the presence of the hydroperoxide, the specific reducing agent, the specific acidic substance, the aqueous medium and a polyalkylene oxide compound, and in the substantial absence of an emulsifier.

In the substantial absence of an emulsifier is as described above.

In the above-described first embodiment, step 1 is carried out in the presence of the specific polymer, whereas in the second embodiment, step 1 is carried out in the presence of a polyalkylene oxide compound and in the substantial absence of an emulsifier. That is, in the first embodiment, the specific polymer is used, whereas in the second embodiment, a polyalkylene oxide compound is used, which is different. Therefore, in the following, mainly the points in the second embodiment that differ from the first embodiment will be described.

The polyalkylene oxide compound is a compound to form the nucleus (seed) during polymerization of TFE and other monomer. In other words, it corresponds to a nucleating additive.

The polyalkylene oxide compound is a compound containing a polyalkylene oxide chain. As the polyalkylene oxide chain, for example, a polymethylene oxide chain, a polyethylene oxide chain, a polypropylene oxide chain, or a polytetramethylene oxide chain, may be mentioned.

The polyalkylene oxide compound preferably has a surface tension in water in excess of about 40 dyne/cm at a concentration of 1,000 ppm. The above surface tension is more preferably in excess of about 42 dyne/cm, further preferably in excess of about 45 dyne/cm. The above surface tension is preferably at most about 73 dyne/cm.

The number average molecular weight of the polyalkylene oxide compound is preferably from 50 to 2,000, more preferably from 100 to 1,500, further preferably from 150 to 1,300.

As the polyalkylene oxide compound, a compound represented by the formula (5) is preferred.

Formula (5): R^{a}-(O-R^{c})ₚ-O-R^{b}

In the formula (5), R^{a} and R^{b} represent each independently a hydrogen atom, an alkyl group, an acryloyl group or a methacryloyl group.

R^{c} represents a C₁₋₄ alkylene group, which may be linear or branched.

p represents from 1 to 50.

As specific examples of the polyalkylene oxide compound, polyethylene glycol, polyethylene glycol acrylate, polyethylene glycol methacrylate, polyethylene glycol methyl ether, polyethylene glycol dimethyl ether, polyethylene glycol butyl ether, polypropylene glycol, polypropylene glycol acrylate, polypropylene glycol methacrylate, polypropylene glycol dimethacrylate, polypropylene glycol methyl ether, polypropylene glycol dimethyl ether, polypropylene glycol butyl ether, polypropylene glycol dimethacrylate, and polytetramethylene glycol, may be mentioned.

As the polyalkylene oxide compound, one type may be used alone, or two or more types may be used in combination.

The amount of the polyalkylene oxide compound used is preferably from 0.1 to 10 mass ppm, more preferably from 1 to 10 mass ppm, to the entire mass of the aqueous medium.

In the second embodiment, it is preferred that the polyalkylene oxide compound and an oxidizing agent are mixed in an aqueous medium to obtain a dispersion, and then, in the obtained dispersion, TFE and other monomer are polymerized to produce a fluorinated copolymer.

As specific examples of the oxidizing agent, hydrogen peroxide and a polymerization initiator may be mentioned.

As specific examples of the polymerization initiator, the compounds exemplified as the water-soluble polymerization initiator in the above first embodiment may be mentioned. As the polymerization initiator, a persulfate is preferred, and ammonium persulfate or potassium persulfate is more preferred.

When a polyalkylene oxide compound and an oxidizing agent are mixed in an aqueous medium, a dispersion is obtained in which the lipophilic nucleating moieties are dispersed in the aqueous medium. More specifically, when a polyalkylene oxide compound and an oxidizing agent are mixed, the hydrophilic portion of the polyalkylene oxide compound is decomposed and the hydrophobic portion of the polyalkylene oxide compound becomes the lipophilic nucleating moiety. The lipophilic nucleating moieties are dispersed in the aqueous medium, and the fluorinated copolymer can be finely dispersed at these moieties.

Since the lipophilic nucleating moieties are excellent in affinity with TFE and other monomer, polymerization of TFE and other monomer can easily proceed in the dispersion containing the lipophilic nucleating moieties. That is, the lipophilic nucleating moieties can be a site for hydrophobic environment for polymerization of TFE and other monomer.

The amount of the oxidizing agent used is preferably from 0.01 to 1.00 mass%, more preferably from 0.05 to 0.5 mass%, to the entire mass of the aqueous medium.

The temperature at the time of mixing the polyalkylene oxide compound and the oxidizing agent is preferably from 20 to 120°C, more preferably from 40 to 120°C.

The mixing time at the time of mixing the polyalkylene oxide compound and the oxidizing agent is preferably from 0.05 to 1.00 hour.

It is preferred to add a water-soluble inorganic salt to the aqueous medium before or during mixing of the polyalkylene oxide compound and the oxidizing agent.

The amount of the water-soluble inorganic salt used is preferably from 1 to 1,000 mass ppm, more preferably from 10 to 1,000 mass ppm, to the entire mass of the aqueous medium.

As specific examples of the water-soluble inorganic salt, sodium sulfite, sodium hydrogen sulfite, sodium chloride, potassium sulfite, potassium hydrogen sulfite, potassium carbonate, ammonium oxalate, sodium tetraborate, sodium acetate, ammonium carbonate, ammonium dihydrogen phosphate and diammonium phosphate may be mentioned; a sulfite is preferred; and sodium sulfite or ammonium sulfite is more preferred.

### (Third embodiment)

In the third embodiment, step 1 is carried out under the further presence of an emulsifier. That is, in the third embodiment, the above polymerization of TFE and other monomer is carried out in the presence of the hydroperoxide, the specific reducing agent, the specific acidic substance, the aqueous medium, and an emulsifier.

As the emulsifier, various surfactants may be used.

From the viewpoint of improving the yield of the fluorinated copolymer, it is preferred to preemulsify a mixture comprising TFE and other monomer as monomer components, a surfactant, and an aqueous medium, before carrying out step 1. For example, a mixture comprising TFE, other monomer, a surfactant and an aqueous medium, is mixed and dispersed by a homo-mixer or high-pressure emulsifier.

The aqueous emulsion contains preferably from 1.0 to 50.0 parts by mass, more preferably from 3 to 40 parts by mass of the fluorinated copolymer, to 100 parts by mass of the aqueous medium.

By carrying out step 1, a fluorinated copolymer having TFE units and other monomer units will be formed.

The above fluorinated copolymer is particulate and homogeneously dispersed in the aqueous medium.

The average primary particle size of the particulate fluorinated copolymer is not restricted, and is often from 20 and 3,000 nm, preferably from 20 to 1,000 nm.

The aqueous solution in which the fluorinated copolymer obtainable in step 1 is dispersed (hereinafter referred to also as the "aqueous dispersion of the fluorinated copolymer") contains preferably from 1.0 to 50.0 parts by mass, more preferably from 2.0 to 40.0 parts by mass of the particles containing the fluorinated copolymer, to 100 parts by mass of the aqueous medium.

By flocculating the particles containing the fluorinated copolymer from the fluorinated copolymer aqueous dispersion, it is possible to obtain a powder of the particles containing the fluorinated copolymer.

As the flocculation method, freezing flocculation, acid flocculation, base flocculation, or flocculation using a flocculant may be mentioned, but not limited thereto.

In the case of freezing flocculation, the flocculation temperature is preferably from 0 to 5°C. The flocculation time is preferably at least 1 hour, more preferably at least 2 hours.

In the case of the acid flocculation, a method of adding a solution containing an acid to the fluorinated copolymer aqueous dispersion, is preferred. As the acid to be added, hydrochloric acid, nitric acid, sulfuric acid, oxalic acid, hydrofluoric acid or the like may be mentioned, and hydrochloric acid is preferred. The concentration of the acid in the solution containing the acid is preferably from 0.1 to 50 mass%, more preferably from 1 to 30 mass%, further preferably from 1 to 10 mass%.

As the base flocculation, a method of adding a solution containing a base to the fluorinated copolymer aqueous dispersion, is preferred. As the base to be added, sodium hydroxide, potassium hydroxide or ammonium carbonate, may be mentioned, and sodium hydroxide is preferred. The concentration of the base in the solution containing the base is preferably from 0.1 to 50 mass%, more preferably from 1 to 30 mass%, further preferably from 1 to 10 mass%.

As the flocculation by a flocculant, a known flocculant may be used. As the known flocculant, an aluminum salt, a calcium salt, or a magnesium salt may be mentioned. Specifically, aluminum sulfate, an alum represented by the general formula M'Al(SO₄)₂·12H₂O [where M' is a monovalent cation other than lithium], calcium nitrate, or magnesium sulfate, may be mentioned; the alum is preferred; and potassium alum where M is potassium, is more preferred.

As the flocculation method, the base flocculation is preferred, since flocculation can thereby be particularly easily proceeded.

### EXAMPLES

In the following, the present invention will be described in more detail with reference to Examples, but the present invention is not limited to these Examples. Ex. 1, 7, and 8 are Comparative Examples, and Ex. 2 to 6 are Examples of the present invention.

The various measurement and evaluation methods are as follows.

### Average primary particle diameter (nm) of fluorinated copolymer particles in aqueous dispersion:

Using an aqueous dispersion of fluorinated copolymer particles as a sample, the measurement was conducted by using a laser diffraction and scattering particle size distribution analyzer (Otsuka Electronics Co., Ltd., ELSZ).

### Measurement of Q (mm³/s):

Using a flow tester (manufactured by Shimadzu Corporation), the Q value (referred to also as volumetric flow velocity) was measured at 297°C with a load of 7 kg. In a case where the Q value could not be measured at 7 kg load, the Q value was measured at 50 kg load.

### Proportions of the respective units in a fluorinated copolymer:

The proportions of the respective units in a fluorinated copolymer were obtained from the ¹⁹F-NMR analysis, the fluorine content analysis, and the infrared absorption spectrum analysis.

### (Ex. 1)

### [Step 0]

After nitrogen replacement in a 1.3 L stainless steel polymerization tank, the pressure was reduced to -0.1 MPaG, and ultrapure water (740 g), sodium sulfite (88 mg), and 2-methoxyethyl methacrylate (hereinafter referred to also as "MEM") (40 mg) were charged. Next, the temperature was raised to 60°C while stirring the solution in the polymerization tank, and 4 ml of a solution having potassium persulfite (hereinafter referred to also as "KPS") dissolved in deionized water (KPS concentration: 5 mass%) was injected into the polymerization tank to polymerize MEM.

### [Step 1]

Next, into the polymerization tank containing the aqueous solution containing poly 2-methoxyethyl methacrylate being the specific polymer obtained in step 0, mixed monomers of TFE/ethylene (hereinafter referred to also as "E") = 86/14 molar ratio were injected; the polymerization tank was pressurized to 2.6 MPaG; and ethyl acetate (2 ml), 12 ml of a solution having KPS dissolved in deionized water (KPS concentration: 5 mass%), and PFBE (0.73 g) were injected into the polymerization tank. Here, in the aqueous solution contained in the polymerization tank, sodium sulfite which was used in step 0 remained. The amount of ethyl acetate used was 0.24 mass% to the entire mass of the aqueous medium. When the pressure in the polymerization tank began to drop, mixed monomers of TFE/E = 54/46 molar ratio were added to keep the internal pressure in the polymerization tank at 2.6 MPaG, and to let polymerization be proceeded. Every time when 20 g of the mixed monomers was injected, PFBE (0.73 g) was added to the polymerization tank. At the time when the continuous charging of the mixed monomers reached 60 g, the polymerization tank was cooled to room temperature, and the gas in the polymerization tank was released to the atmosphere. The polymerization time was 491 minutes. The pH of the obtained aqueous dispersion of the fluorinated copolymer was 4.4, and the solid content concentration was about 6.6 mass%. Further, the average primary particle diameter of the fluorinated copolymer in the aqueous dispersion was 166 nm.

The aqueous dispersion was cooled and the fluorinated copolymer particles were flocculated to obtain a powder. Next, the fluorinated copolymer powder was dried at 150°C. The Q value of the obtained fluorinated copolymer powder under 7 kg load was 0.2 mm³/s, and the molar ratio of TFE units/E units/PFBE units in the fluorinated copolymer was 52.7/45.7/1.6.

### (Ex. 2)

### [Step 0]

After nitrogen replacement in a 1.2 L stainless steel polymerization tank, the pressure was reduced to -0.1 MPaG, and ultrapure water (713 g), sodium sulfite (120 mg), and methyl methacrylate (MMA) (10 mg) were charged. Next, the temperature was raised to 50°C while stirring the solution in the polymerization tank, and 1 ml of a solution having TBHP as a hydroxide dissolved in deionized water (TBHP concentration: 0.195 mass%) was injected into the polymerization tank to polymerize MMA.

### [Step 1]

Next, into the polymerization tank containing the aqueous solution containing methyl polymethacrylate being the specific polymer obtained in step 0, mixed monomers of TFE/E = 86/14 molar ratio were injected; the polymerization tank was pressurized to 2.6 MPaG; and methyl acetate (5 ml) and t-butyl alcohol (t-BuOH) (21 g) were injected. 8 ml of a solution having TBHP dissolved in deionized water (TBHP concentration: 0.195 mass%) and PFBE (0.73 g) were injected into the polymerization tank. Here, in the aqueous solution contained in the polymerization tank, sodium sulfite used in step 0 remained. The amount of methyl acetate used was 0.63 mass% to the entire mass of the aqueous medium. When the pressure in the polymerization tank began to drop, mixed monomers of TFE/E = 54/46 molar ratio were added to keep the internal pressure in the polymerization tank at 2.6 MPaG, and to let the polymerization be proceeded. Every 10 minutes after the start of polymerization, 1 ml of a solution having TBHP dissolved in deionized water (TBHP concentration: 0.195 mass%) was added. Every time when 12 g of the mixed monomers was injected, a sodium sulfite solution (sodium sulfite concentration: 0.92 mass%, 2 ml) was added to the polymerization tank. Every time when 20 g of the mixed monomers was injected, PFBE (0.73 g) was added to the polymerization tank. At the time when the continuous charging of the mixed monomers reached 100 g, the polymerization tank was cooled to room temperature, and the gas in the polymerization tank was released to the atmosphere. The polymerization time was 377 minutes. The pH of the obtained aqueous dispersion of the fluorinated copolymer was 4.4, and the solid content concentration was about 12 mass%. Further, the average primary particle diameter of the fluorinated copolymer in the aqueous dispersion was 240 nm.

The aqueous dispersion was cooled, and the fluorinated copolymer particles were flocculated to obtain a powder. Next, the fluorinated copolymer powder was dried at 150°C. The Q value of the obtained fluorinated copolymer powder under 7 kg load could not be measured. Therefore, the Q value of the obtained fluorinated copolymer powder at 50 kg load was measured, and it was 100 mm³/s. The molar ratio of TFE units/ E units/ PFBE units in the fluorinated copolymer was 54.5/44.6/0.9.

### (Ex. 3)

### [Step 0]

After nitrogen replacement in a 1.2 L stainless steel polymerization tank, the pressure was reduced to -0.1 MPaG, and ultrapure water (740 g), sodium sulfite (150 mg) and MEM (10 mg) were charged. Next, the temperature was raised to 50°C while stirring the solution in the polymerization tank, and 1 ml of a solution having TBHP dissolved in deionized water (TBHP concentration: 0.195 mass%) was injected into the polymerization tank to polymerize MEM.

### [Step 1]

Next, into the polymerization tank containing the aqueous solution containing poly 2-methoxyethyl methacrylate being the specific polymer obtained in Step 0, mixed monomers of TFE/E = 86/14 molar ratio, were injected to raise the pressure to 2.6 MPaG, and methyl acetate (2 ml) and ethyl acetate (2 ml) were injected. 8 ml of a solution having TBHP dissolved in deionized water (TBHP concentration: 0.195 mass%) and PFBE (0.73 g) were injected into the polymerization tank. Here, in the aqueous solution contained in the polymerization tank, the sodium sulfite used in step 0 remained. The amount of methyl acetate used was 0.25 mass%, to the entire mass of the aqueous medium. The amount of ethyl acetate used was 0.24 mass%, to the entire mass of the aqueous medium. When the pressure in the polymerization tank began to drop, mixed monomers of TFE/E = 54/46 molar ratio were added to keep the internal pressure in the polymerization tank at 2.6 MPaG, and to let the polymerization be proceeded. Every 10 minutes after the start of polymerization, 1 ml of a solution having TBHP dissolved in deionized water (TBHP concentration: 0.087 mass%) was added. Every time when 10 g of the mixed monomers were injected, the sodium sulfite aqueous solution (sodium sulfite concentration: 0.92 mass%, 2 ml) was added to the polymerization tank. Every time when 20 g of the mixed monomers were injected, PFBE (0.73 g) was added to the polymerization tank. At the time when the continuous charging of the mixed monomers reached 80 g, the polymerization tank was cooled to room temperature, and the gas in the polymerization tank was released to the atmosphere. The polymerization time was 592 minutes. The pH of the obtained aqueous dispersion of the fluorinated copolymer was 4.4, and the solid content concentration was about 9.7 mass%. Further, the average primary particle diameter of the fluorinated copolymer in the aqueous dispersion was 258 nm.

The aqueous dispersion was cooled, and the fluorinated copolymer particles were flocculated to obtain a powder. Next, this fluorinated copolymer powder was dried at 150°C. The Q value of the obtained fluorinated copolymer powder at 7 kg load was 1.6 mm³/s, and the molar ratio of TFE units/E units/PFBE units in the fluorinated copolymer was 54.4/44.8/0.8.

### (Ex. 4)

### [Step 0]

After nitrogen replacement in a 1.3 L stainless steel polymerization tank, the pressure was reduced to -0.1 MPaG, and ultrapure water (740 g), sodium sulfite (150 mg) and MMA (10 mg) were charged. Next, the temperature was raised to 50°C while stirring the solution in the polymerization tank, and 1 ml of a solution having TBHP dissolved in deionized water (TBHP concentration: 0.195 mass%) was injected into the polymerization tank to polymerize MMA.

### [Step 1]

Next, into the polymerization tank containing the aqueous solution containing polymethyl methacrylate being the specific polymer obtained in step 0, mixed monomers of TFE/E = 86/14 molar ratio were injected; the polymerization tank was pressurized to 2.6 MPaG; and methyl acetate (2 ml) and t-BuOH (28 g) were injected. 8 ml of a solution having TBHP dissolved in deionized water (TBHP concentration: 0.195 mass%) and PFBE (0.73 g) were injected into the polymerization tank. Here, in the aqueous solution contained in the polymerization tank, sodium sulfite used in step 0 remained. The amount of methyl acetate used was 0.24 mass%, to the entire mass of the aqueous medium. When the pressure in the polymerization tank began to drop, mixed monomers of TFE/E = 54/46 molar ratio were added to keep the internal pressure in the polymerization tank at 2.6 MPaG, and to let the polymerization be proceeded. Every 10 minutes after the start of polymerization, 1 ml of a solution having TBHP dissolved in deionized water (TBHP concentration: 0.087 mass%) was added to the polymerization tank. Every time when 15 g of the mixed monomers was injected, a sodium sulfite aqueous solution (sodium sulfite concentration: 0.92 mass%, 2 ml) was added to the polymerization tank. Every time when 20 g of the mixed monomers was injected, PFBE (0.73 g) was added to the polymerization tank. At the time when the continuous charging of the mixed monomers reached 100 g, the polymerization tank was cooled to room temperature, and the gas in the polymerization tank was released to the atmosphere. The polymerization time was 468 minutes. The pH of the obtained aqueous dispersion of the fluorinated copolymer was 4.0, and the solid content concentration was about 12.2 mass%. Further, the average primary particle diameter of the fluorinated copolymer in the aqueous dispersion was 212 nm.

The aqueous dispersion was cooled, and the fluorinated copolymer particles were flocculated to obtain a powder. Next, the fluorinated copolymer powder was dried at 150°C. The Q value of the obtained fluorinated copolymer powder under 7 kg load could not be measured. Therefore, the Q value of the obtained fluorinated copolymer powder at 50 kg load was measured, and it was 20 mm³/s. The molar ratio of TFE units/E units/PFBE units in the fluorinated copolymer was 54.8/44.2/1.0.

### (Ex. 5)

### [Step 0]

After nitrogen replacement in a 1.3 L stainless steel polymerization tank, the pressure was reduced to -0.1 MPaG, and ultrapure water (740 g), sodium sulfite (150 mg) and vinyl acetate (VA) (10 mg) were charged. Next, the temperature was raised to 50°C while stirring the solution in the polymerization tank, and 1 ml of a solution having TBHP dissolved in deionized water (TBHP concentration: 0.195 mass%) was injected into the polymerization tank to polymerize VA.

### [Step 1]

Next, into the polymerization tank containing the aqueous solution containing polyvinyl acetate being the specific polymer obtained in step 0, mixed monomers of TFE/E = 86/14 molar ratio were injected, the polymerization tank was pressurized to 2.6 MPaG, and methyl acetate (5 ml) and t-BuOH (21 g) were injected. 8 ml of a solution having TBHP dissolved in deionized water (TBHP concentration: 0.195 mass%) and PFBE (0.73 g) were injected into the polymerization tank. Here, in the aqueous solution contained in the polymerization tank, sodium sulfite used in step 0 remained. The amount of methyl acetate used was 0.61 mass%, to the entire mass of the aqueous medium. When the pressure in the polymerization tank began to drop, mixed monomers of TFE/E = 54/46 molar ratio were added to keep the internal pressure in the polymerization tank at 2.6 MPaG, and to let the polymerization be proceeded. Every 10 minutes after the start of polymerization, 1 ml of a solution having TBHP dissolved in deionized water (TBHP concentration: 0.087 mass%) was added to the polymerization tank. Every time when 10 g of the mixed monomers was injected, a sodium sulfite aqueous solution (sodium sulfite concentration: 0.92 mass%, 2 ml) was added to the polymerization tank. Every time when 20 g of the mixed monomers was injected, PFBE (0.73 g) was added to the polymerization tank. At the time when the continuous charging of the mixed monomers reached 120 g, the polymerization tank was cooled to room temperature, and the gas in the polymerization tank was released to the atmosphere. The polymerization time was 435 minutes. The pH of the obtained aqueous dispersion of the fluorinated copolymer was 3.9, and the solid content concentration was about 13.7 mass%. Further, the average primary particle diameter of the fluorinated copolymer in the aqueous dispersion was 240 nm.

The aqueous dispersion was cooled, and the fluorinated copolymer particles were flocculated to obtain a powder. Next, the fluorinated copolymer powder was dried at 150°C. The Q value of the obtained fluorinated copolymer powder under 7 kg load could not be measured. Therefore, the Q value of the obtained fluorinated copolymer powder at 50 kg load was measured, and it was 56 mm³/s. The molar ratio of TFE units/E units/PFBE units in the fluorinated copolymer was 55.4/44.1/ 0.5.

### (Ex. 6)

### [Step 0]

After nitrogen replacement in a 1.3 L stainless steel polymerization tank, the pressure was reduced to -0.1 MPaG, and ultrapure water (713 g), sodium sulfite (120 mg) and MMA (10 mg) were charged. Next, the temperature was raised to 50°C while stirring the solution in the polymerization tank, and 1 ml of a solution having TBHP dissolved in deionized water (TBHP concentration: 0.195 mass%) was injected into the polymerization tank to polymerize MMA.

### [Step 1]

Next, into the polymerization tank containing the aqueous solution containing polymethyl methacrylate being the specific polymer obtained in step 0, mixed monomers of TFE/E = 86/14 molar ratio were injected, the polymerization tank was pressurized to 2.6 MPaG, and methyl acetate (5 ml) and t-BuOH (21 g) were injected. 8 ml of a solution having TBHP dissolved in deionized water (TBHP concentration: 0.195 mass%) and PFBE (0.73 g) were injected into the polymerization tank. Here, in the aqueous solution contained in the polymerization tank, sodium sulfite used in step 0 remained. The amount of methyl acetate used was 0.63 mass%, to the entire mass of the aqueous medium. When the pressure in the polymerization tank began to drop, mixed monomers of TFE/E = 52/48 molar ratio were added to keep the internal pressure in the polymerization tank at 2.6 MPaG, and to let the polymerization be proceeded. Every 10 minutes after the start of polymerization, 1 ml of a solution having TBHP dissolved in deionized water (TBHP concentration: 0.195 mass%) was added to the polymerization tank. Every time when 6 g of the mixed monomers was injected, a sodium sulfite aqueous solution (sodium sulfite concentration: 0.92 mass%, 1 ml) was added to the polymerization tank. Every time when 20 g of the mixed monomers was injected, PFBE (0.73 g) was added to the polymerization tank. At the time when the continuous charging of the mixed monomers reached 140 g, the polymerization tank was cooled to room temperature, and the gas in the polymerization tank was released to the atmosphere. The polymerization time was 508 minutes. The pH of the obtained aqueous dispersion of the fluorinated copolymer was 3.9, and the solid content concentration was about 16 mass%. Further, the average primary particle diameter of the fluorinated copolymer in the aqueous dispersion was 250 nm.

The aqueous dispersion was cooled, and the fluorinated copolymer particles were flocculated to obtain a powder. Next, the fluorinated copolymer powder was dried at 150°C. The Q value of the obtained fluorinated copolymer powder under 7 kg load could not be measured. Therefore, the Q value of the obtained fluorinated copolymer powder at 50 kg load was measured, and it was 85.8 mm³/s. The molar ratio of TFE units/E units/PFBE units in the fluorinated copolymer was 54.3/44.8/0.9.

### (Ex. 7)

### [Step 0]

After nitrogen replacement in a 1.2 L stainless steel polymerization tank, the pressure was reduced to -0.1 MPaG, and ultrapure water (740 g), sodium sulfite (120 mg) and MEM (10 mg) were charged. Next, the temperature was raised to 50°C while stirring the solution in the polymerization tank, and 1 ml of a solution having TBHP dissolved in deionized water (TBHP concentration: 0.195 mass%) was injected into the polymerization tank to polymerize MEM.

### [Step 1]

Next, into the polymerization tank containing the aqueous solution containing poly 2-methoxyethyl methacrylate being the specific polymer obtained in step 0, mixed monomers of TFE/E = 86/14 molar ratio were injected, to pressurize the polymerization tank to 2.6 MPaG, and a solution having TBHP dissolved in deionized water (TBHP concentration: 0.195 mass%) was injected into the polymerization tank. Here, in the aqueous solution in the polymerization tank, sodium sulfite used in step 0 remained. Even when 150 minutes elapsed, the polymerization did not proceed, so the process was stopped. The pH of the obtained aqueous dispersion was 8.5.

### (Ex. 8)

### [Step 0]

After nitrogen replacement in a 1.2 L stainless steel polymerization tank, the pressure was reduced to -0.1 MPaG, and ultrapure water (704 g), the trade name Bruggolite (registered trademark) FF6M (the following formula) (150 mg) and MMA (10 mg) were charged.

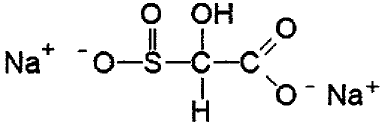

Next, the solution in the polymerization tank was raised to 50°C with stirring, and 1 ml of a solution having TBHP dissolved in deionized water (TBHP concentration: 0.195 mass%) was injected into the polymerization tank to polymerize MMA.

### [Step 1]

Next, into the polymerization tank containing the aqueous solution containing polymethyl methacrylate being the specific polymer obtained in step 0, mixed monomers of TFE/E = 86/14 molar ratio were injected, the polymerization tank was pressurized to 2.6 MPaG, and methyl acetate (2 ml) and t-BuOH (28 g) were injected. Here, in the aqueous solution contained in the polymerization tank, Bruggolite (registered trademark) FF6M used in step 0 remained. 8 ml of a solution having TBHP dissolved in deionized water (TBHP concentration: 0.195 mass%) and PFBE (0.73 g) were injected into the polymerization tank. The amount of methyl acetate used was 0.25 mass%, to the entire mass of the aqueous medium. When the pressure in the polymerization tank began to drop, mixed monomers of TFE/E = 54/46 molar ratio were added to keep the internal pressure in the polymerization tank at 2.6 MPaG, and to let the polymerization be proceeded. Every 10 minutes after the start of polymerization, 1 ml of a solution having TBHP dissolved in deionized water (0.195 mass%) was added to the polymerization tank. Every time when 20 g of the mixed monomers was injected, PFBE (0.73 g) was added to the polymerization tank. At the time when the continuous charging of the mixed monomers reached 40 g, the polymerization tank was cooled to room temperature, and the gas in the polymerization tank was released to the atmosphere. The polymerization time was 250 minutes. The pH of the obtained aqueous dispersion of the fluorinated copolymer was 3.8, and the solid content concentration was about 5.6 mass%. Further, the average primary particle diameter of the fluorinated copolymer in the aqueous dispersion was 164 nm.

The aqueous dispersion was cooled, and the fluorinated copolymer particles were flocculated to obtain a powder. Next, the fluorinated copolymer powder was dried at 150°C. The Q value of the obtained fluorinated copolymer powder under 7 kg load could not be measured. Therefore, the Q value of the obtained fluorinated copolymer powder at 50 kg load was measured, and it was 32 mm³/s. The molar ratio of TFE units/E units/PFBE units in the fluorinated copolymer was 53.9/44.9/1.2.

### (Evaluation)

The fluorinated copolymer powder obtained in each Ex. was heated at 300°C for 2 hours, whereby the presence or absence of foaming and coloration was confirmed, and evaluated according to the following standards. The results are shown in the Table given below.

### Foaming Evaluation

⊚: None, ○: Slightly present, △: Present, ×: The entire resin is foamed. Coloration Evaluation
⊚: No change before and after heating, ○: Yellow coloring, △: Yellow to brown coloring, ×: Pitch black

In Table 1, the "Amount of hydroperoxide used (1)" column represents the amount of the hydroperoxide used (mass %) to the entire mass of the aqueous medium in step 1.

In Table 1, the "Amount of hydroperoxide used (2)" column represents the amount of the hydroperoxide used (mass %) to the total amount of TFE, E and PFBE used (total mass) in step 1.

In Table 1, the "Amount of specific reducing agent used" column indicates the amount of the specific reducing agent used (mass %) to the entire mass of the aqueous medium in step 1.

In Table 1, the "Amount of specific acidic substance used" column represents the amount of the specific acidic substance used (mass %) to the entire mass of aqueous medium in step 1.

**[Table 1]**

| Ex. | | 1 | 2 | 3 | 4 | 5 | 6 | 7 | 8 |
|---|---|---|---|---|---|---|---|---|---|
| Amount of hydroperoxide used (1) | | - | 0.012 | 0.009 | 0.008 | 0.007 | 0.016 | - | |
| Amount of hydroperoxide used (2) | | - | 0.088 | 0.084 | 0.056 | 0.044 | 0.081 | - | - |
| Amount of specific reducing agent | | - | 0.037 | 0.040 | 0.035 | 0.050 | 0.047 | - | - |
| Amount of specific acid substance | | - | 0.654 | 0.496 | 0.252 | 0.630 | 0.654 | - | - |
| Evaluation | Foaming | × | ⊚ | ⊚ | ⊚ | ○ | ○ | - | Δ |
| | Coloration | × | ⊚ | ⊚ | ○ | ○ | ○ | - | Δ |

As shown in Table 1, the fluorinated copolymers in Ex. 2 to 6 obtained by polymerizing TFE and other monomer in the presence of a hydroperoxide, a specific reducing agent, a specific acidic substance and an aqueous medium had foaming and coloration of ○ or ⊚ when heated at 300°C. Here, the pH of the aqueous dispersions in Ex. 2 to 6 after the polymerization was completed was from 3.0 to 8.0. The fluorinated copolymers in Ex. 2 to 4, in which the pH of the aqueous dispersion after polymerization was from 4.0 to 7.0, showed forming of ⊚ when heated at 300°C. The fluorinated copolymers in Ex. 2 and 3, in which the pH of the aqueous dispersion after polymerization was from 4.4 to 7.0, showed coloration of ⊚ when heated at 300°C. The fluorinated copolymer in Ex. 1, in which KPS was used as a radical initiator, showed foaming and coloration of × when heated at 300°C. In Ex. 7, in which no specific acidic substance was used, polymerization did not proceed. The fluorinated copolymer in Ex. 8, which used Bruggolite (registered trademark) FF6M, which does not correspond to the specified reducing agent, showed foaming and coloration of △ when heated at 300°C.

The entire disclosure of Japanese Patent Application No. 2021-101448 filed on June 18, 2021 including specification, claims and summary is incorporated herein by reference in its entirety.

## Claims

1. A process for producing a fluorinated copolymer, comprising a step of polymerizing tetrafluoroethylene and other monomer other than the tetrafluoroethylene to produce a fluorinated copolymer in the presence of a hydroperoxide, at least one selected from the group consisting of a sulfite, a hydrogen sulfite, a dithionite and a metabisulfite, at least one selected from the group consisting of an acidic substance and a substance that generates an acid by hydrolysis, and an aqueous medium.

2. The method for producing a fluorinated copolymer according to Claim 1, wherein the hydroperoxide is a compound represented by the following formula (X): 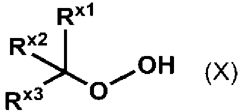 in the formula (X), R^{x1} to R^{x3} represent each independently a C₁₋₁₀ alkyl group.

3. The method for producing a fluorinated copolymer according to Claim 1 or 2, wherein the other monomer is at least one selected from the group consisting of ethylene, propylene, a perfluoroalkyl vinyl ether, a fluoroalkyl ethylene and hexafluoropropylene.

4. The method for producing a fluorinated copolymer according to any one of Claims 1 to 3, wherein the acidic substance and the substance that generates an acid by hydrolysis are selected from the group consisting of compounds represented by the formulae (A) to (E): 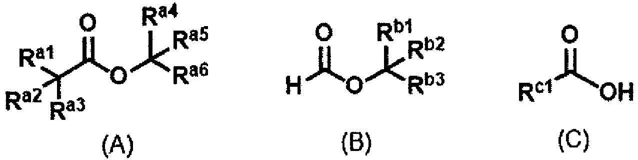 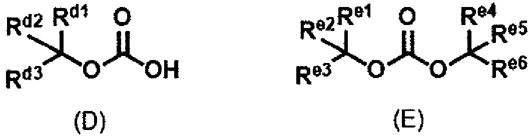
in the formula (A), R^{a1} to R^{a6} represent each independently a hydrogen atom or an alkyl group,
in the formula (B), R^{b1} to R^{b3} represent each independently a hydrogen atom or an alkyl group,
in the formula (C), R^{c1} represents a hydrogen atom or an alkyl group,
in the formula (D), R^{d1} to R^{d3} represent each independently a hydrogen atom or an alkyl group, and
in the formula (E), R^{e1} to R^{e6} represent each independently a hydrogen atom or an alkyl group.

5. The method for producing a fluorinated copolymer according to any one of Claims 1 to 4, wherein the amount of the hydroperoxide used is from 0.0001 to 1.0 mass% to the entire mass of the aqueous medium.

6. The method for producing a fluorinated copolymer according to any one of Claims 1 to 5, wherein the amount of the sulfite, the hydrogen sulfite, the dithionite or the metabisulfite used is from 0.0001 to 1.0 mass% to the entire mass of the aqueous medium.

7. The method for producing a fluorinated copolymer according to any one of Claims 1 to 6, wherein the amount of the acidic substance or the substance that generates an acid by hydrolysis is from 0.0005 to 20.0 mass% to the entire mass of the aqueous medium.

8. The method for producing a fluorinated copolymer according to any one of Claims 1 to 7, wherein
the sulfite is sodium sulfite, potassium sulfite, or ammonium sulfite,
the hydrogen sulfite is sodium hydrogen sulfite, potassium hydrogen sulfite, or ammonium hydrogen sulfite,
the dithionite is sodium dithionite, potassium dithionite, or ammonium dithionite, and
the metabisulfite is sodium metabisulfite, potassium metabisulfite, or ammonium metabisulfite.

9. The method for producing a fluorinated copolymer according to any one of Claims 1 to 8, wherein a polyalkylene oxide compound is further present in the step.

10. The method for producing a fluorinated copolymer according to any one of Claims 1 to 8, wherein an emulsifier is further present in the step.

## Patentansprüche

1. Verfahren zur Herstellung eines fluorierten Copolymers, umfassend einen Schritt des Polymerisierens von Tetrafluorethylen und einem anderen Monomer, das anders ist als das Tetrafluorethylen, um ein fluoriertes Copolymer in der Gegenwart eines Hydroperoxids, mindestens eines ausgewählt aus der Gruppe, bestehend aus einem Sulfit, einem Hydrogensulfit, einem Dithionit und einem Metabisulfit, mindestens eines ausgewählt aus der Gruppe, bestehend aus einer sauren Substanz und einer Substanz, die durch Hydrolyse eine Säure erzeugt, und einem wässrigen Medium, herzustellen.

2. Verfahren zur Herstellung eines fluorierten Copolymers nach Anspruch 1, wobei das Hydroperoxid eine Verbindung ist, die durch die folgende Formel (X) dargestellt wird: 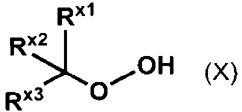 wobei in der Formel (X) R^{x1} bis R^{x3} jeweils unabhängig voneinander eine C₁₋₁₀-Alkylgruppe darstellen.

3. Verfahren zur Herstellung eines fluorierten Copolymers nach Anspruch 1 oder 2, wobei das andere Monomer mindestens eines ist, ausgewählt aus der Gruppe, bestehend aus Ethylen, Propylen, einem Perfluoralkylvinylether, einem Fluoralkylethylen und Hexafluorpropylen.

4. Verfahren zur Herstellung eines fluorierten Copolymers nach einem der Ansprüche 1 bis 3, wobei die saure Substanz und die Substanz, die durch Hydrolyse eine Säure erzeugt, ausgewählt sind aus der Gruppe, bestehend aus Verbindungen, die durch die Formeln (A) bis (E) dargestellt sind: 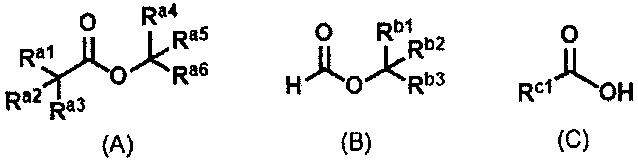 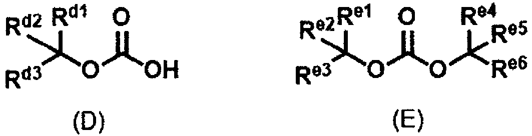
wobei in der Formel (A) R^{a1} bis R^{a6} jeweils unabhängig voneinander ein Wasserstoffatom oder eine Alkylgruppe darstellen,
wobei in der Formel (B) R^{b1} bis R^{b3} jeweils unabhängig voneinander ein Wasserstoffatom oder eine Alkylgruppe darstellen,
wobei in der Formel (C) R^{c1} ein Wasserstoffatom oder eine Alkylgruppe darstellt,
wobei in der Formel (D) R^{d1} bis R^{d3} jeweils unabhängig voneinander ein Wasserstoffatom oder eine Alkylgruppe darstellen, und
wobei in der Formel (E) R^{e1} bis R^{e6} jeweils unabhängig voneinander ein Wasserstoffatom oder eine Alkylgruppe darstellen.

5. Verfahren zur Herstellung eines fluorierten Copolymers nach einem der Ansprüche 1 bis 4, wobei die Menge des verwendeten Hydroperoxids von 0,0001 bis 1,0 Massenprozent der Gesamtmasse des wässrigen Mediums beträgt.

6. Verfahren zur Herstellung eines fluorierten Copolymers nach einem der Ansprüche 1 bis 5, wobei die Menge des verwendeten Sulfits, des Hydrogensulfits, des Dithionits oder des Metabisulfits von 0,0001 bis 1,0 Massenprozent der Gesamtmasse des wässrigen Mediums beträgt.

7. Verfahren zur Herstellung eines fluorierten Copolymers nach einem der Ansprüche 1 bis 6, wobei die Menge der sauren Substanz oder der Substanz, die durch Hydrolyse eine Säure erzeugt, von 0,0005 bis 20,0 Massenprozent der Gesamtmasse des wässrigen Mediums beträgt.

8. Verfahren zur Herstellung eines fluorierten Copolymers nach einem der Ansprüche 1 bis 7, wobei
das Sulfit Natriumsulfit, Kaliumsulfit oder Ammoniumsulfit ist,
das Hydrogensulfit Natriumhydrogensulfit, Kaliumhydrogensulfit oder Ammoniumhydrogensulfit ist,
das Dithionit Natriumdithionit, Kaliumdithionit oder Ammoniumdithionit ist, und
das Metabisulfit Natriummetabisulfit, Kaliummetabisulfit oder Ammoniummetabisulfit ist.

9. Verfahren zur Herstellung eines fluorierten Copolymers nach einem der Ansprüche 1 bis 8, wobei in dem Schritt weiter eine Polyalkylenoxidverbindung vorhanden ist.

10. Verfahren zur Herstellung eines fluorierten Copolymers nach einem der Ansprüche 1 bis 8, wobei in dem Schritt weiter ein Emulgator vorhanden ist.

## Revendications

1. Procédé de production d'un copolymère fluoré, comprenant une étape de polymérisation de tétrafluoroéthylène et d'un autre monomère que le tétrafluoroéthylène pour produire un copolymère fluoré en présence d'un hydroperoxyde, d'au moins un composé sélectionné parmi le groupe constitué d'un sulfite, d'un sulfite d'hydrogène, d'un dithionite et d'un métabisulfite, d'au moins un composé sélectionné parmi le groupe constitué d'une substance acide et d'une substance qui génère un acide par hydrolyse, et d'un milieu aqueux.

2. Procédé de production d'un copolymère fluoré selon la revendication 1, dans lequel l'hydroperoxyde est un composé représenté par la formule suivante (X) : 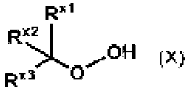 dans la formule (X), R^{x1} à R^{x3} représentent chacun indépendamment un groupe alkyle en C₁₋₁₀.

3. Procédé de production d'un copolymère fluoré selon la revendication 1 ou 2, dans lequel l'autre monomère est au moins un sélectionné parmi le groupe constitué de l'éthylène, du propylène, d'un éther vinylique de perfluoroalkyle, d'un fluoroalkyle éthylène et de l'hexafluoropropylène.

4. Procédé de production d'un copolymère fluoré selon l'une quelconque des revendications 1 à 3, dans lequel la substance acide et la substance qui génère un acide par hydrolyse sont sélectionnées parmi le groupe constitué de composés représentés par les formules (A) à (E) : 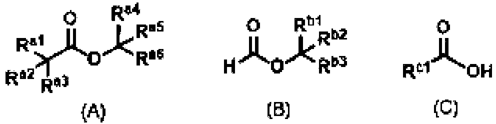 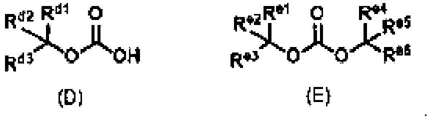
dans la formule (A), R^{a1} à R^{a6} représentent chacun indépendamment un atome d'hydrogène ou un groupe alkyle,
dans la formule (B), R^{b1} à R^{b3} représentent chacun indépendamment un atome d'hydrogène ou un groupe alkyle,
dans la formule (C), R^{c1} représente un atome d'hydrogène ou un groupe alkyle, dans la formule (D), R^{d1} à R^{d3} représentent chacun indépendamment un atome d'hydrogène ou un groupe alkyle, et
dans la formule (E), R^{e1} à R^{e6} représentent chacun indépendamment un atome d'hydrogène ou un groupe alkyle.

5. Procédé de production d'un copolymère fluoré selon l'une quelconque des revendications 1 à 4, dans lequel la quantité de l'hydroperoxyde utilisée va de 0,0001 à 1,0 % en masse par rapport à la masse entière du milieu aqueux.

6. Procédé de production d'un copolymère fluoré selon l'une quelconque des revendications 1 à 5, dans lequel la quantité du sulfite, du sulfite d'hydrogène, du dithionite ou du métabisulfite utilisée va de 0,0001 à 1,0 % en masse par rapport à la masse entière du milieu aqueux.

7. Procédé de production d'un copolymère fluoré selon l'une quelconque des revendications 1 à 6, dans lequel la quantité de la substance acide ou la substance qui génère un acide par hydrolyse va de 0,0005 à 20,0 % en masse par rapport à la masse entière du milieu aqueux.

8. Procédé de production d'un copolymère fluoré selon l'une quelconque des revendications 1 à 7, dans lequel
le sulfite est le sulfite de sodium, le sulfite de potassium ou le sulfite d'ammonium,
le sulfite d'hydrogène est le sulfite d'hydrogène sodique, le sulfite d'hydrogène potassique ou le sulfite d'hydrogène d'ammonium,
le dithionite est le dithionite de sodium, le dithionite de potassium ou le dithionite d'ammonium, et
le métabisulfite est le métabisulfite de sodium, le métabisulfite de potassium ou le métabisulfite d'ammonium.

9. Procédé de production d'un copolymère fluoré selon l'une quelconque des revendications 1 à 8, dans lequel un composé d'oxyde de polyalkylène est en outre présent dans l'étape.

10. Procédé de production d'un copolymère fluoré selon l'une quelconque des revendications 1 à 8, dans lequel un émulsifiant est en outre présent dans l'étape.
